# FASCICULE DE BREVET EUROPEEN

(11) **EP 2 336 659 B1**
(45) Date de publication et mention de la délivrance du brevet: **07.11.2018**
(21) Numéro de dépôt: 10196086.2
(22) Date de dépôt: 21.12.2010
(51) Int. Cl.: F24F 7/08, F16L 9/18, F24F 7/00

(54) **Séparateur de flux d'air bidirectionnel pour installation à double flux**
Bidirektionaler Luftstrom-Separator für Zweistromanlage
Bi-directional air flow separator for a double-flow installation

(30) Priorité: 21.12.2009 FR 0959295
(43) Date de publication de la demande: 22.06.2011
(73) Titulaire: Electricité de France, 75008 Paris (FR)
(72) Inventeur: Foissac, Guillaume, 77250 Moret sur Loing (FR); Ritz, Jean-Benoît, 77250, Moret sur Loing (FR); Lajoie-Mazenc, Eric, 77250 Veneux les Sablons (FR); Lebreton, Jean-Marc, 77250 Veneux les Sablons (FR)
(74) Mandataire: Regimbeau

(56) Documents cités:
- EP-A2- 2 088 380
- DE-A1- 19 850 094
- DE-U1- 29 611 516
- US-A1- 2002 197 948
- US-A1- 2008 113 609

## Description

L'invention concerne le domaine des séparateurs de flux d'air, notamment pour bâtiment.

Plus précisément, l'invention concerne les ensembles à double flux d'air ayant une entrée d'air et une sortie d'air à l'extérieur d'un bâtiment. Ces ensembles sont associés à un séparateur de flux d'air destiné à être placé à l'interface entre l'intérieur et l'extérieur d'un bâtiment.

L'invention s'applique en particulier aux ensembles thermodynamiques sur air extérieur et aux systèmes de ventilation mécanique contrôlée.

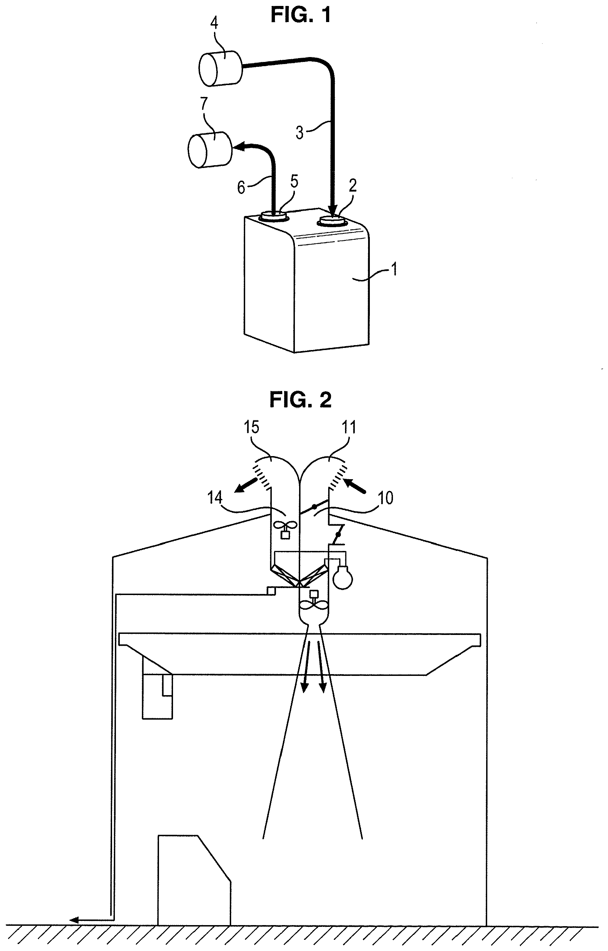

En référence à la figure 1 qui présente schématiquement un ensemble connu de l'état de la technique, les machines thermodynamiques 1, notamment les machines thermodynamiques comportant une pompe à chaleur, sont généralement installées au sein d'un local et comprennent une entrée d'air 2 et une sortie d'air 5. Cette entrée d'air 2 et cette sortie d'air 5 sont généralement chacune respectivement associées, via des canalisations 3, 6, à une ouverture respective 4, 7 ménagée dans un mur du local, afin de communiquer avec l'air extérieur au bâtiment.

Cette solution est critiquée notamment dans le fait qu'elle nécessite deux ouvertures 4, 7 au sein d'un mur, ce qui génère un coût et une complexité de mise en oeuvre de l'installation. De plus, il existe une contrainte quant à l'espacement entre les ouvertures 4 et 7 pour éviter toute recirculation, même partielle, d'air entre l'entrée et la sortie d'air, une telle recirculation engendrant, lorsqu'elle se produit, une baisse de rendement de la machine thermodynamique (par exemple dans le cas d'une pompe à chaleur travaillant en mode chauffage du fait que l'air rejeté plus frais, recircule avec l'air entrant) ou un fonctionnement non satisfaisant de l'installation de ventilation mécanique contrôlée.

L'état de la technique propose diverses solutions afin de tenter de résoudre les problématiques liées à la séparation des deux flux d'air, plus précisément à l'entrée et à la sortie d'air dans un bâtiment, notamment à destination d'une machine thermique sur air, par exemple une pompe à chaleur.

En référence à la figure 2 qui présente une autre solution de l'état de la technique relative à un dispositif de ventilation forcée (figure extraite du document JP 5 288 362 publié en 1993), il a été proposé un dispositif destiné à être agencé sur la toiture d'un bâtiment, comprenant deux canaux verticaux 10, 14 sensiblement parallèles le long de la hauteur du dispositif et divergents au niveau de leurs bouches d'entrée et de sortie respectives 11, 15, de façon à avoir un écoulement distinct pour les flux d'entrée et les flux de sortie d'air. Le document JP 5 288 362 préconise d'orienter vers le toit, soit vers le bas, l'entrée et la sortie d'air au niveau des bouches 11, 15.

Un tel dispositif est critiqué d'une part en ce qu'il nécessite un accès au toit (ce qui n'est pas toujours possible et présente une complexité et un coût d'installation) et d'autre part en ce que cette installation nécessite la mise en place d'une canalisation de l'air depuis le toit jusqu'à la machine thermodynamique, laquelle se trouve généralement dans une partie basse du bâtiment, obligeant ainsi à des travaux de gros oeuvre au sein du bâtiment et conduisant à des pertes de charge importantes.

Pour ces raisons, le dispositif proposé dans le document JP 5 288 362 n'a pas connu de développement économique important.

En référence aux figures 3 et 4, (respectivement tirées des documents KR 2005/0012409 - publié en 2005 - et FR 2 926 874 - publié en 2009 -), il a été proposé des dispositifs comprenant une grille 20 formée d'ailettes dont l'orientation générale est horizontale, couvrant l'ouverture vers l'extérieur d'un local comprenant une machine thermique sur air, comme une pompe à chaleur prévue par exemple pour chauffer un bâtiment. Cette grille 20 comprend deux groupes d'ailettes 22, 24 couvrant deux parties verticalement adjacentes de la grille, dévolues respectivement à l'aspiration de l'air extérieur et au refoulement de l'air en sortie de la pompe à chaleur. Les ailettes de chaque groupe 22, 24 ont la même orientation entre elles, différente de celle de l'autre groupe, de manière à rejeter dans des directions différentes le flux entrant et le flux sortant d'air.

Cependant, des critiques ont été également émises quant à ces solutions notamment dans le fait qu'elles nécessitent une large ouverture dans la paroi (ou le mur) extérieure du local, ce qui n'est pas toujours possible et est souvent complexe et onéreux à réaliser. De plus, cette large ouverture ajoute des problèmes supplémentaires, par exemple quant à la sécurité du bâtiment, cette grille facilitant l'infraction au sein du bâtiment.

Ces solutions engendrent également un flux d'air au sein du local comprenant la machine thermodynamique, ce qui d'une part peut être désagréable pour le ou les utilisateur(s) (par exemple la personne chargée de la maintenance ou du réglage de ladite machine) et d'autre part oblige à un confinement de la machine par rapport au reste du bâtiment. Si la machine n'est pas confinée, l'on assiste à un brassage entre l'air extérieur prélevé et l'air intérieur souvent maintenu à température de vie.

En pratique, il s'avère que les dispositifs proposés dans les documents KR 2005/0012409 et FR 2 926 874 n'ont pas connu non plus de développement économique important malgré la forte demande résultant du marché lié à l'installation de machines thermodynamiques, notamment à base de pompe à chaleur, tant dans le domaine de la construction neuve que dans celui de la rénovation. Dans ce domaine technique, on connait également les documents US 2002/0197948, US 2008/0113609, DE19850094, DE29611516 et EP2088380.

En synthèse, l'homme de l'art n'est pas parvenu jusqu'ici à concilier, dans un dispositif fiable, de taille et de coût acceptables, les questions contradictoires que sont d'une part la nécessité d'éviter une recirculation des fluides entre la sortie et l'entrée et d'autre part l'impératif de limiter les pertes de charge.

Ainsi, un but de la présente invention est de proposer un séparateur de flux extérieur pour machine à double flux d'air permettant de résoudre les problèmes cités précédemment.

Plus généralement, un but de l'invention est d'offrir un ensemble dont l'installation est simple, peu coûteuse et nécessite un minimum de gros oeuvre au sein du bâtiment.

Plus particulièrement, l'invention a pour objet de fournir un séparateur de flux extérieur qui puisse être installé à l'aide d'une seule ouverture réalisée dans une paroi verticale et qui puisse avoir un encombrement minimum.

A cet effet, l'invention propose un séparateur de flux d'air bidirectionnel pour installation à double flux, tel que défini en revendication 1 annexée.

La deuxième divergence est particulièrement importante pour les installations thermiques puisqu'elle permet par exemple pour une pompe à chaleur travaillant en mode chauffage de rejeter vers le bas l'air froid de forte densité qui a tendance à descendre, et inversement de prélever vers le haut l'air plus chaud de plus faible densité et qui a tendance à remonter. La première divergence (dans un plan horizontal) et également un élément particulièrement important en ce qu'elle permet en outre d'augmenter tout risque de recirculation de l'air. En effet, la première divergence provoque un décalage dans un plan horizontal de l'entrée et de la sortie d'air. Ainsi, dans le cas où la deuxième divergence est insuffisante (par exemple à cause d'une température ambiante si froide que l'air froid rejeté remonte horizontalement et risque d'être également aspiré par l'entrée d'air), la première divergence évite que l'air qui remonte se retrouve au niveau de l'entrée d'air grâce au décalage provoqué dans un plan horizontal.

Avantageusement, mais facultativement, l'invention comprend au moins l'une des caractéristiques suivantes :
▪ l'inclinaison entre les directions des flux au niveau des ouvertures externes et les directions des flux au niveau des passages élémentaires est comprise entre 10° et 90°, préférentiellement de l'ordre de 20°,
▪ l'inclinaison des flux d'entrée et de sortie par rapport à l'horizontale, due au moyen d'orientation, est comprise entre 5° et 30°, avantageusement de l'ordre de 15°,
▪ à partir de l'arête commune, les deux déflecteurs s'écartent respectivement de part et d'autre d'un plan vertical orthogonal à l'ouverture principale,
▪ les deux déflecteurs sont symétriques par rapport à un plan vertical passant par l'arête commune,
▪ l'ouverture principale a une section circulaire et la section de chacun des passages élémentaires est au moins globalement en forme de demi-cercle,
▪ la section de chacun des canaux croît progressivement, à partir des passages élémentaires, vers les ouvertures externes,
▪ l'axe géométrique central des deux canaux est situé dans un plan horizontal commun, et qu'il est prévu dans chaque canal, au moins une ailette directionnelle adaptée pour diriger respectivement l'un des flux vers le bas en direction du passage associé de l'ouverture principale et l'autre flux vers le bas en éloignement du passage respectivement associé de l'ouverture principale,
▪ les ailettes sont placées au niveau des passages formés dans l'ouverture principale,
▪ les axes géométriques centraux des deux canaux sont inclinés par rapport à l'horizontale selon des directions respectivement opposées,
▪ les parois internes du boîtier, déflecteurs compris, définissent une transition continue, sans rupture brutale de courbure dans l'orientation des parois, entre la section des passages et la section des ouvertures externes,
▪ le boîtier est formé de deux coquilles symétriques par rapport à un plan vertical,
▪ chaque coquille a la forme générale d'un cornet tubulaire évasé, à partir d'un passage, en direction d'une ouverture externe,
▪ chacune des coquilles possède une symétrie par rapport à un plan médian horizontal,
▪ les deux coquilles sont identiques,
▪ les deux coquilles sont fixées sur une plaque support verticale au centre de laquelle est formée l'ouverture principale,
▪ les ouvertures externes ont une forme substantiellement d'ellipse dont le grand axe est vertical,
▪ chaque coquille possède une partie de paroi supérieure qui s'étend au-delà de ses parois latérales verticales pour former un moyen anti-pluie,
▪ chaque coquille possède une partie de paroi inférieure qui s'étend vers le bas en direction de l'extérieur,
▪ les déflecteurs divisent l'ouverture principale en deux passages de sections identiques,
▪ les déflecteurs divisent l'ouverture principale en deux passages de sections différentes,
▪ le passage de plus faible section est dédié au flux sortant.

L'invention concerne également une installation à double flux d'air bidirectionnel, tel qu'un ensemble thermique, notamment une pompe à chaleur, comprenant :
∘ un dispositif thermodynamique comprenant une entrée d'air et une sortie d'air,
∘ un élément de canalisation bidirectionnelle divisée en deux canaux parallèles par une paroi centrale connecté à une extrémité à l'entrée d'air et la sortie d'air du dispositif thermodynamique,
∘ un séparateur de flux d'air selon l'invention agencé à l'extérieur du bâtiment et connecté à l'autre extrémité de l'élément de canalisation au niveau de l'ouverture principale.

Avantageusement, mais facultativement, l'invention comprend au moins l'une des caractéristiques suivantes :
▪ l'élément de canalisation est formé d'une conduite dont l'enveloppe externe est de section circulaire de révolution et qui comporte une cloison de séparation diamétrale continue sur toute sa longueur,
▪ la cloison est thermiquement isolante afin d'éviter tout transfert thermique entre les flux circulant à contre sens dans l'élément de canalisation,
▪ le séparateur de flux est fixé sur un mur vertical.

L'invention concerne également un procédé d'implantation d'une installation selon l'invention dans un bâtiment, caractérisé par le fait qu'il comprend au moins les étapes suivantes :
∘ fournir un dispositif thermodynamique comprenant une entrée d'air et une sortie d'air,
∘ installer un séparateur de flux d'air à l'extérieur du bâtiment au niveau d'un mur vertical,
∘ fournir un élément de canalisation bidirectionnelle divisée en deux canaux parallèles par une paroi centrale,
∘ connecter une extrémité de l'élément de canalisation à l'entrée d'air et la sortie d'air du dispositif thermodynamique,
∘ connecter l'autre extrémité de l'élément de canalisation au niveau de l'ouverture principale du séparateur de flux d'air.

D'autres caractéristiques, buts et avantages de la présente invention apparaitront à la lecture de la description détaillée qui va suivre, et en regard des figures annexées, données à titre d'exemples non limitatifs et sur lesquelles :

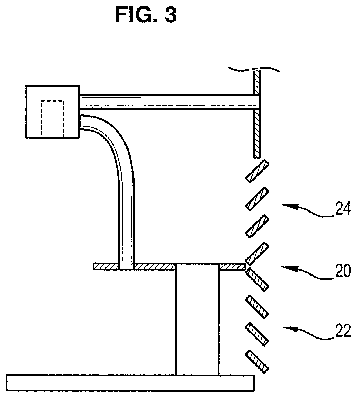

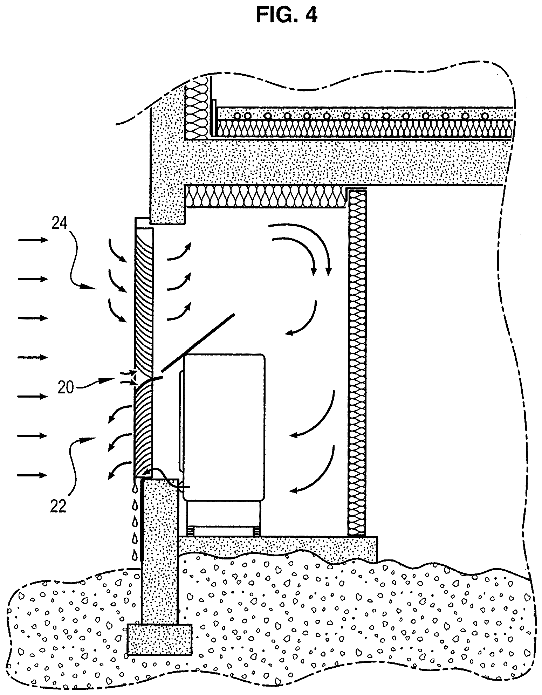

- les figures 1, 2, 3 et 4, précédemment décrites, sont des représentations schématiques de séparateurs de flux extérieur selon l'état de la technique,
- la figure 5 est une représentation schématique d'un ensemble thermodynamique comprenant un séparateur de flux extérieur pour pompe à chaleur selon une réalisation possible de la présente invention,
- la figure 6 est une représentation schématique en vue cavalière d'un séparateur de flux extérieur selon un premier mode de réalisation de la présente invention,
- les figures 7 et 8 sont des représentations schématiques partielles et en coupe médiane, respectivement verticale et horizontale, du séparateur de flux extérieur présenté à la figure 6,
- la figure 9 est une représentation schématique en perspective, selon une vue opposée à la figure 6, d'un séparateur de flux extérieur selon une réalisation possible de la présente invention,
- la figure 10 est une vue en perspective d'un séparateur de flux extérieur conforme à un deuxième mode de réalisation, préférentiel, de la présente invention,
- la figure 11 est une vue de dessus du séparateur illustré sur la figure 10,
- la figure 12 est une vue de face du séparateur illustré sur la figure 10,
- les figures 13 et 14 sont des vues schématiques en coupe verticale, de deux séparateurs de flux conformes à la présente invention et illustrent plus précisément deux modes de réalisation des moyens d'orientation,
- les figures 15 et 16 sont des vues schématiques en coupe horizontale, de deux séparateurs de flux conformes à la présente invention et illustrent plus précisément la possibilité de prévoir soit des vitesses de flux identiques, soit des vitesses de flux différentes, dans les deux canaux, et
- les figures 17 et 18 sont des vues schématiques en perspective, de deux éléments de canalisation conformes à la présente invention destinés à assurer le raccordement entre un séparateur de flux et un équipement associé.

Comme indiqué précédemment la présente invention s'applique aussi bien au domaine des installations thermiques, qu'au domaine des installations de ventilation mécanique contrôlée. Cependant dans la suite de la description on décrira des modes de réalisation dédiés à des installations thermiques, sans que ce descriptif puisse être considéré comme limitatif.

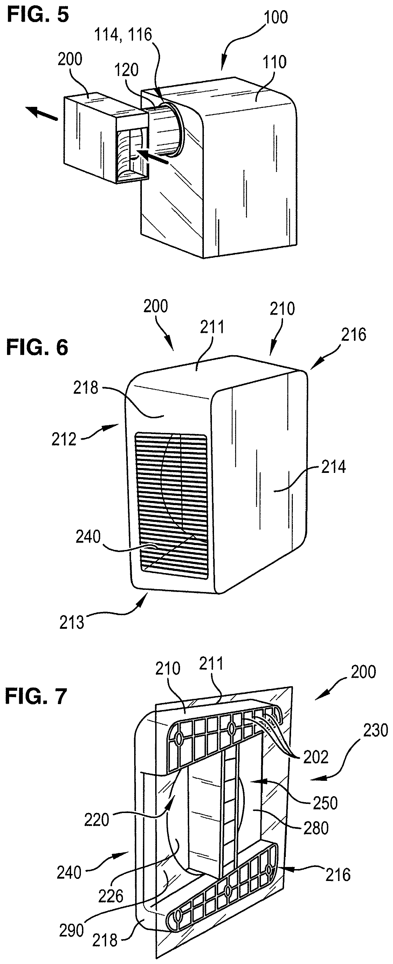

La figure 5 représente schématiquement un ensemble thermodynamique 100 selon une réalisation possible de la présente invention. Cet ensemble 100 comprend une machine thermodynamique 110 qui travaille sur air (par exemple une pompe à chaleur travaillant en mode chauffage ou un climatiseur). Une telle machine thermodynamique 110 comprend une entrée 114 et une sortie 116 de flux d'air. Pour une pompe à chaleur en mode chauffage, le flux sortant est un flux d'air froid et le flux entrant est un flux d'air « chaud », à la température extérieure. Bien évidemment l'inverse est également possible selon le type de machine thermodynamique, notamment pour un climatiseur.

Cet ensemble thermodynamique 100 comprend également un élément de canalisation 120 bidirectionnel (c'est-à-dire qu'il permet en son sein, la conduite de deux flux d'air dans des directions opposées). Cet élément de canalisation bidirectionnel 120 permet la conduite des flux entrant et sortant entre un séparateur de flux d'air 200 et la machine thermodynamique 110.

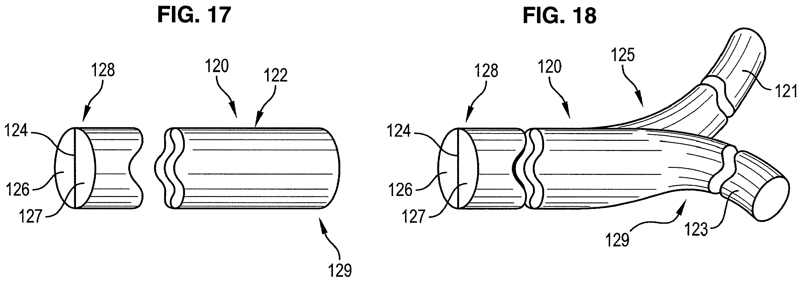

Le séparateur de flux d'air 200 sera décrit plus en détail dans la suite de la description en regard des figures 6 à 16. L'élément de canalisation 120 sera décrit plus en détail dans la suite de la description en regard des figures 17 et 18.

On va tout d'abord décrire les principales caractéristiques d'un séparateur de flux conforme à la présente invention, en regard des figures 6 à 9.

Comme indiqué précédemment le séparateur de flux d'air bidirectionnel 200, pour installation à double flux, conforme à la présente invention, comprend un boîtier 210 qui comporte une ouverture principale interne 220, au moins deux ouvertures secondaires externes 230, 240, distinctes de l'ouverture principale 220 et un moyen 250 de séparation des flux comprenant au moins deux déflecteurs 260, 270.

Les déflecteurs 260, 270 s'étendent, à partir d'une arête commune 222 divisant l'ouverture principale 220 en deux passages élémentaires 224, 226. Ils définissent, à partir de cette arête 222, deux canaux divergents 280, 290. Ces deux canaux 280, 290 s'étendent respectivement entre un passage élémentaire 224, 226 de l'ouverture principale 220 et l'une des ouvertures secondaires externes 230, 240.

Les deux passages élémentaires 224, 226 sont raccordés respectivement à l'entrée 114 et à la sortie 116 de l'installation interne 110, par le biais de l'élément de canalisation 120.

Plus précisément selon la présente invention, l'ouverture principale 220 est inscrite dans un plan vertical.

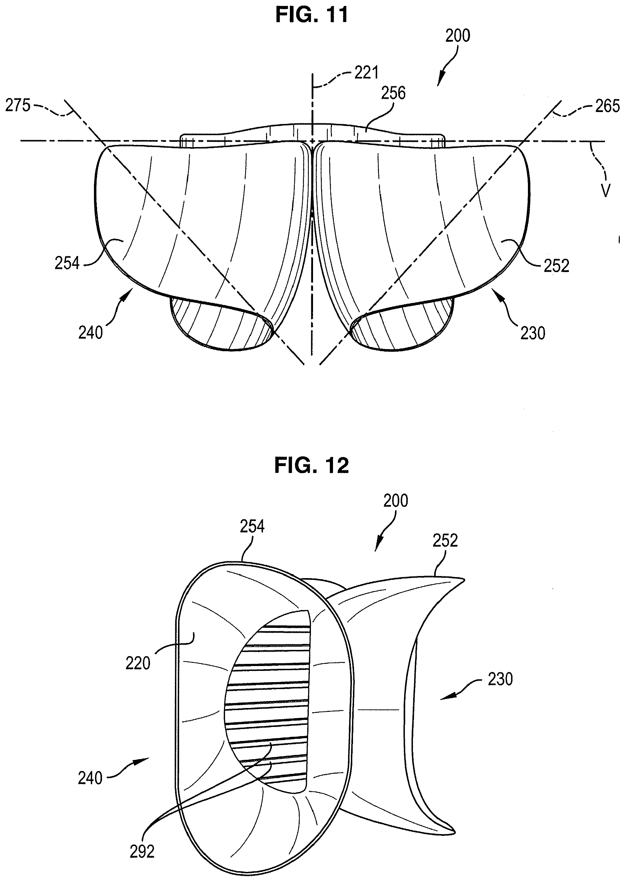

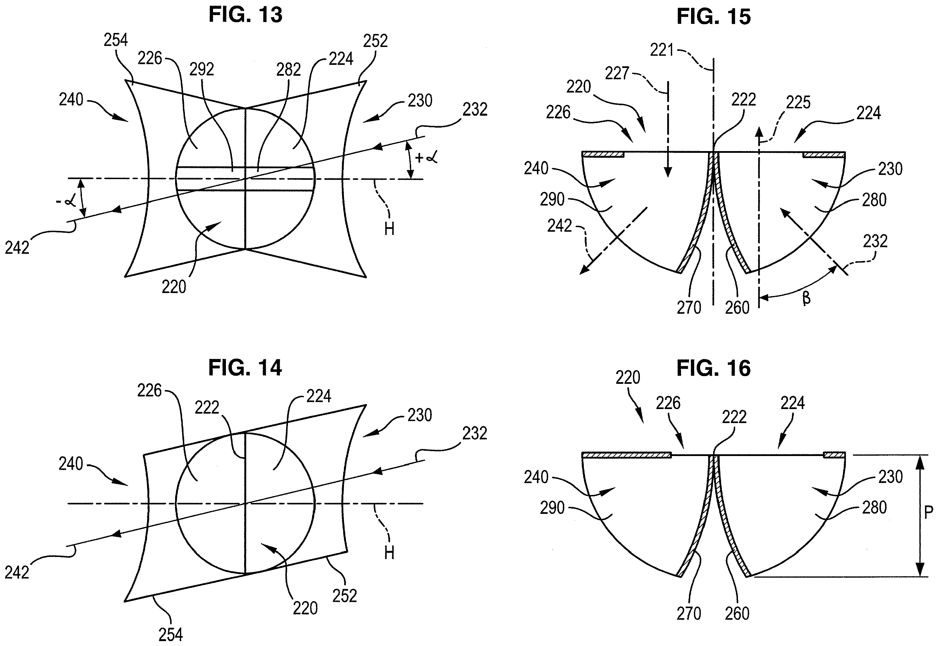

Les déflecteurs 260, 270 s'étendent dans des directions horizontalement divergentes. En d'autres termes, à partir de l'arête commune 222, les deux déflecteurs 260, 270 s'écartent respectivement de part et d'autre d'un plan vertical 221 (voir figures 11 et 15) orthogonal à l'ouverture 220. Ils sont de préférence symétriques par rapport à ce plan vertical 221 passant par l'arête commune 222.

Le déflecteur 260 dévie le flux entrant centré sur un axe 232 au niveau de l'ouverture secondaire d'entrée 230, sous forme d'un flux traversant le passage élémentaire 224, en direction de la machine 110, et centré sur un axe 225 orthogonal au plan vertical de l'ouverture principale 220 au niveau de ce passage 224.

Symétriquement le déflecteur 270 dévie le flux provenant de la machine 110 et qui traverse le passage élémentaire 226 centré sur un axe 227 orthogonal au plan vertical de l'ouverture principale 220 au niveau de ce passage 226, sous forme d'un flux sortant traversant l'ouverture secondaire de sortie 240, et centré sur un axe 242 au niveau de cette ouverture secondaire de sortie 240.

Par ailleurs selon la présente invention, le boîtier 210 comprend en outre un moyen d'orientation des flux tel que le flux d'entrée et le flux de sortie qui transitent respectivement par l'un des deux canaux 280, 290, présentent au niveau des ouvertures 230 et 240 des inclinaisons - α et + α, respectivement opposées par rapport à l'horizontale H.

Ce moyen d'orientation qui peut prendre différentes formes, sera décrit plus en détail par la suite en regard des figures 13 et 14.

Les inventeurs ont déterminé que les dispositions qui précèdent permettent d'éviter une recirculation entre le flux d'air sortant par l'ouverture 240 et le flux d'air entrant par l'ouverture 230, sans cependant créer de perte de charge notable.

On aperçoit sur les figures 6 à 9, un séparateur de flux 200 dont le boîtier 210 a une géométrie substantiellement parallépipédique rectangle. Ce boîtier 210 comprend quatre parois verticales opposées 212, 214, 216 et 218. La face 212 est destinée à faire face au mur (et à accueillir les moyens de fixation du boîtier 210 sur le mur). La face 214 est parallèle et opposée à la face 212. Les faces 216 et 218 sont parallèles et opposées entre elles et sont transversale aux faces 212 et 214. Le boîtier 210 comprend également deux faces globalement horizontales 211 (située sur le haut du boîtier) et 213 (située sur le bas du boîtier).

L'ouverture principale interne 220 est formée au centre de la paroi verticale 212. Elle est de préférence de section circulaire. Ainsi l'ouverture 220 peut être réalisée facilement avec des outils classiques, telle qu'une scie cloche ou tout moyen équivalent.

L'ouverture principale 220 est scindée en deux passages élémentaires 224, 226 par les déflecteurs 260, 270 précités.

Les passages 224, 226 sont centrés sur les axes 225, 227 précités.

Les ouvertures externes 230, 240 sont placées respectivement sur les parois verticales 216 et 218. Elles sont centrées sur les axes 232, 242 précités.

Comme on le voit à l'examen des figures 7, 8 et 9, le boîtier 210 définit deux canaux 280 et 290 qui relient respectivement l'un des passages 224, 226 à l'une des ouvertures secondaires externes 230, 240.

Lorsque l'arête commune 222 des déflecteurs 260, 270 correspond à un diamètre de l'ouverture principale 220, la section de chacun des passages 224, 226 est en forme de demi-cercle. Selon le mode de réalisation particulier illustré sur les figures 6 à 9, les ouvertures secondaires 230 et 240 sont elles de section rectangulaire.

Les parois internes du boîtier 210, en particulier les déflecteurs 260, 270, définissent une transition continue, c'est-à-dire sans rupture brutale de courbure dans l'orientation des parois, entre la section des passages 224, 226 et la section des ouvertures externes 230, 240.

Plus précisément selon la présente invention, la section totale de chacun des canaux 280, 290 croît progressivement, à partir des passages 224, 226, vers les ouvertures externes 230, 240.

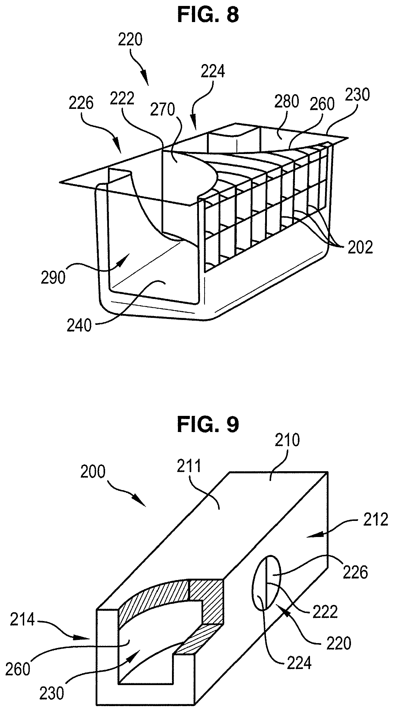

Avantageusement, comme on le voit sur les figures 7 et 8, l'ensemble du volume interne du boîtier 210 qui entoure les canaux 280, 290 est formé par des nervures 202 formant par exemple une structure en nid d'abeille ou équivalente. Un tel boîtier 210 de séparateur de flux d'air exige peu de matière première. Il est ainsi léger et de faible coût de fabrication.

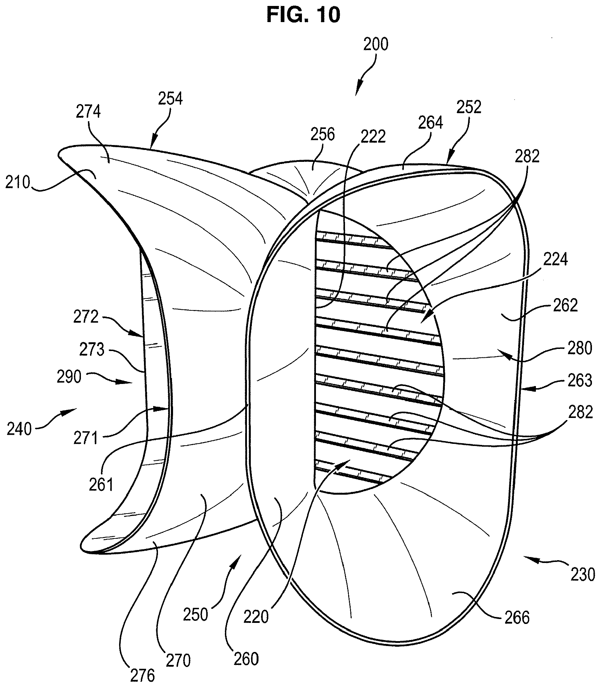

On va maintenant décrire le mode de réalisation préférentiel du séparateur de flux conforme à la présente invention illustré sur les figures 10 à 12.

Selon le mode de réalisation représenté sur les figures 10 à 12, le boîtier 210 est formé de deux coquilles 252, 254 symétriques par rapport au plan vertical 221 précité.

Chaque coquille 252, 254 a de préférence la forme générale d'un cornet tubulaire évasé, à partir d'un passage 224, 226, en direction d'une ouverture externe 230, 240. Un tel mode de réalisation nécessite peu de matière et conduit à un dispositif particulièrement léger et optimisé en termes d'écoulement d'air.

De préférence chacune des coquilles 252, 254 possède par ailleurs une symétrie par rapport à un plan médian horizontal. Cette dernière caractéristique permet de réaliser deux coquilles 252, 254 rigoureusement identiques, par exemple à l'aide d'un moule d'injection unique.

Selon le mode de réalisation illustré sur les figures 10 à 12, les deux coquilles 252, 254 sont fixées sur une plaque support verticale 256 au centre de laquelle est formée l'ouverture principale 220.

On retrouve ainsi sur les figures 10 à 12 un séparateur de flux d'air bidirectionnel 200, comprenant un boîtier 210 formé par l'assemblage des deux coquilles 252, 254 et de la plaque 256. Ce boîtier 210 comporte une ouverture principale 220, deux ouvertures secondaires externes 230, 240, distinctes de l'ouverture principale 220 et deux déflecteurs 260, 270 constituant un moyen 250 de séparation des flux.

Comme pour le mode de réalisation illustré sur les figures 6 à 9, les déflecteurs 260, 270 s'étendent, à partir d'une arête commune 222 qui divise l'ouverture 220 en deux passages 224, 226. Les déflecteurs 260, 270 définissent, à partir de cette arête 222, deux canaux horizontalement divergents 280, 290 qui rejoignent respectivement l'une des ouvertures secondaires externes 230, 240.

Selon le mode de réalisation préférentiel représenté sur les figures 10 à 12, les ouvertures externes 230, 240 ont une forme substantiellement d'ellipse dont le grand axe est vertical.

Chaque coquille 252, 254 a ainsi une géométrie qui évolue progressivement entre une section en forme de demi-cercle, au niveau des passages 224, 226, et une section en ellipse, au niveau des ouvertures externes 230, 240.

Plus précisément selon le mode de réalisation représenté sur les figures 10 à 12, chacune des deux coquilles 252, 254 composant le boîtier 210 est formée par :
- un déflecteur 260, 270 délimitant les canaux 280, 290 du côté du plan de symétrie vertical 221,
- une paroi interne 262, 272 délimitant les canaux 280, 290 du côté de la plaque 256, et
- une paroi supérieure 264, 274 et une paroi inférieure 266, 276 qui relient respectivement un déflecteur 260, 270 et une paroi interne 262, 272.

Chaque déflecteur 260, 270 a de préférence une forme au moins légèrement concave en direction du centre du canal associé 280, 290, vue en coupe horizontale. Il évolue entre une génératrice interne rectiligne et verticale qui correspond à l'arête commune 222 coïncidant par exemple avec un diamètre de l'ouverture principale 220, et une arête rectiligne externe 261, 271 de préférence verticale. A leurs extrémités supérieure et inférieure, les déflecteurs 260, 270 s'incurvent progressivement vus en coupe verticale, concavité dirigée vers l'intérieur des canaux, pour prolonger sans discontinuité de courbure les parois supérieures 264, 274 et inférieures 266, 276.

Les parois internes 262, 272 sont de préférence globalement planes, verticales, parallèles à la plaque support 256. Elles évoluent entre une génératrice formée d'un demi-cercle qui entoure l'ouverture principale 220, et une arête rectiligne externe 263, 273 parallèle à l'arête 261, 271 et de préférence verticale. A leurs extrémités supérieure et inférieure, les parois 262, 272 s'incurvent progressivement vus en coupe verticale, concavité dirigée vers l'intérieur des canaux, symétriquement aux déflecteurs 260, 270 pour prolonger également sans discontinuité de courbure les parois supérieures 264, 274 et inférieures 266, 276.

Ces parois supérieures 264, 274 et inférieures 266, 276 sont quant à elles formées de calottes arrondies, concaves vers l'intérieur des canaux.

Les arêtes 261 et 263 d'une part, 271 et 273 d'autre part définissent deux à deux, respectivement un plan moyen vertical des ouvertures externes 230 et 240.

Les plans moyens ainsi définis référencés 265 et 275 sur la figure 11 sont transversaux entre eux et également transversaux au plan vertical V dans lequel est inscrite l'ouverture interne 220.

On notera par ailleurs à l'examen des figures 10 à 12 annexées, que de préférence les parois supérieures 264, 274 et inférieures 266, 276 s'étendent au-delà des plans moyens précités 265 et 275.

Ainsi la partie des parois supérieures 264, 274 en dépassement des plans 265, 275 constitue des moyens anti-pluies destinés à interdire la pénétration de pluie dans le volume interne du boîtier 210.

Le cas échéant, en variante ou en complément, le séparateur de flux conforme à la présente invention peut comprendre des ailettes situées par exemple au niveau des ouvertures externes 230 et 240 pour interdire la pénétration de pluie à l'intérieur des canaux 280, 290.

La partie des parois inférieures 266, 276 qui dépasse des plans 265, 275, permet de parfaire l'esthétique et l'aérodynamisme du dispositif. Elle constitue également une gouttière permettant d'éliminer l'eau qui pourrait accidentellement pénétrer, par pluie ou condensation dans un canal 280, 290.

Les inventeurs, par des tests réalisés en soufflerie, ont pu montrer qu'une telle géométrie, non seulement évite la recirculation des flux d'air entre les éléments 252 et 254 mais également évite les zones de répartition non homogène des écoulements. Au contraire, cette géométrie permet une bonne répartition des flux et une optimisation des zones mortes. Elle s'expanse de préférence en direction des ouvertures externes 230, 240 et limite à leur minimum les pertes de charge.

Comme indiqué précédemment, selon la présente invention, le boîtier 210 comprend un moyen d'orientation des flux tel que le flux d'entrée et le flux de sortie qui transitent respectivement par l'un des deux canaux 280, 290, présentent au niveau des ouvertures 230 et 240 des inclinaisons - α et + α, respectivement opposées par rapport à l'horizontale H. Bien que l'amplitude de l'inclinaison du flux d'entrée ne soit pas nécessairement identique en valeur absolue à celle du flux de sortie, de préférence ces inclinaisons sont identiques +/- a.

Un tel moyen d'orientation peut prendre essentiellement deux formes (qui s'appliquent aussi bien au premier mode de réalisation illustré sur les figures 6 à 9) qu'au deuxième mode de réalisation illustré sur les figures 10 à 12.

Selon une première variante de réalisation schématisée sur la figure 13, l'axe géométrique central des deux canaux 280, 290 est situé dans un plan horizontal commun, mais il est prévu dans chaque canal, au moins une ailette directionnelle 282, 292. L'ailette 282 est adaptée pour prélever l'un des flux, à savoir le flux chaud, favorablement depuis le haut et le diriger vers le passage 224 de l'ouverture 220. L'ailette 292 est adaptée pour diriger l'autre flux, à savoir le flux froid, vers le bas en éloignement du passage 226 de l'ouverture 220. Il peut être prévu une ou plusieurs ailettes 282, 292 associées à chaque canal 280, 290. Les ailettes 282, 292 peuvent être placées en tout lieu approprié des canaux 280, 290, de préférence au niveau des passages 224, 226.

Les ailettes 282, 292 sont ainsi avantageusement formées de plaques allongées qui s'étendent horizontalement dans leur grande dimension coïncidant au plan de l'ouverture 220, mais inclinées sur l'horizontale dans leur petite dimension au moins globalement parallèle aux axes précités 225 et 227.

Selon une deuxième variante de réalisation schématisée sur la figure 14, les axes géométriques centraux des deux canaux 280, 290 sont inclinés par rapport à l'horizontale H selon des directions respectivement opposées.

L'axe du canal d'entrée d'air chaud 230 est globalement confondu avec l'axe 232 précité et incliné vers le bas en direction du passage 224 de l'ouverture 220. L'axe du canal de sortie d'air froid 240 est globalement confondu avec l'axe 242 précité et incliné vers le bas en éloignement du passage 226 de l'ouverture 220.

Comme on l'a évoqué précédemment, les moyens d'orientation précités permettent d'accompagner et d'accentuer la divergence horizontale imposée par les déflecteurs 260 et 270.

Comme on l'a illustré sur la figure 15, les déflecteurs 260, 270 peuvent diviser l'ouverture principale 220 en deux passages 224, 226 de section identique. Dans ce cas, l'arête commune 222 s'étend selon un diamètre de l'ouverture 220. A débit de flux entrant et sortant identiques, les vitesses des flux entrant et sortant sont alors identiques.

Cependant comme on l'a illustré sur la figure 16, l'on peut aussi prévoir que les déflecteurs 260 et 270 divisent l'ouverture principale 220 en deux passages 224 et 226 de sections différentes. Dans ce cas, à débit de flux entrant et sortant identiques, la vitesse du flux passant par le passage 226 de plus faible section est plus élevée que la vitesse du flux passant par le passage 224 de plus grande section. De préférence le passage de plus faible section 226 est dédié au flux sortant de sorte que ce flux soit projeté à vitesse élevée loin de l'ouverture de sortie 240, tandis que le passage de plus forte section 224 est dédié au flux entrant de sorte que ce flux soit aspiré à vitesse plus faible près de l'ouverture d'entrée 230. On réduit ainsi encore le risque de recirculation entre les flux de sortie et d'entrée.

La différence de section des passages 224 et 226 peut également tenir compte de la différence de densité des flux entrant et sortant résultant de la différence de température de ces deux flux.

On va maintenant décrire les deux modes de réalisation de l'élément de canalisation bidirectionnel 120 illustré sur les figures 17 et 18.

Selon le mode de réalisation illustré sur la figure 17, l'élément de canalisation 120 est formé d'une conduite 122 avantageusement flexible dont l'enveloppe externe est de section circulaire de révolution et comporte une cloison 124 de séparation diamétrale continue sur toute sa longueur.

La section de la conduite 122 correspond à la section de l'ouverture 220 et la position de la cloison 124 correspond à la position de l'arête commune 222 des déflecteurs. L'homme de l'art comprendra qu'une telle cloison 124 permet de délimiter deux canaux parallèles et hermétiquement séparés 126, 127 destinés à être raccordés respectivement, à une première extrémité 128 sur les passages 224, 226 de l'ouverture 220 et à une deuxième extrémité 129 sur l'entrée et la sortie de la machine 110.

La cloison 124 est de préférence thermiquement isolante afin d'éviter tout transfert thermique entre les flux circulant à contre sens dans les canaux 126, 127 et d'éviter tout effet de condensation. Il peut s'agir par exemple et non limitativement d'une cloison en polycarbonate alvéolaire.

Un tel élément de canalisation bidirectionnel 120 permet avantageusement de conduire les flux d'air sortant et entrant du séparateur de flux 200 à partir de et vers la machine thermodynamique 110.

L'élément de canalisation illustré sur la figure 18 se distingue de celui illustré sur la figure 17 en ce que au niveau de sa seconde extrémité 129, les deux canaux 126, 127 sont individualisés sous forme d'une bifurcation 125 définissant deux conduits individuels distincts 121, 123.

Selon un mode de réalisation particulier et non limitatif :
- le diamètre de l'ouverture principale 220 est compris entre 15 et 50 cm, typiquement de l'ordre de 30 cm,
- le ratio entre les sections des passages 224 et 226 est compris entre 1 et ½, par exemple de l'ordre de 2/3,
- le ratio entre les sections des ouvertures 230, 240 et celles des passages 224, 226 respectivement associés, est compris entre 1 et 1, 5, voire 3,
- la profondeur P du séparateur considérée perpendiculairement au plan vertical contenant l'ouverture principale 220 et visualisée sur la figure 16, est de l'ordre de 15 cm,
- le ratio entre le grand axe vertical et le petit axe horizontal du contour des ouvertures externes 230, 240 est compris entre 1,5 et 3, typiquement de l'ordre de 2,
- le grand axe vertical des ouvertures externes est avantageusement de l'ordre de 40 cm,
- l'inclinaison β entre les directions 232, 242 des flux au niveau des ouvertures externes 230, 240 et les directions des flux au niveau des passages 224, 226 est comprise entre 10° et 90°, préférentiellement de l'ordre de 20°
- l'inclinaison +/- α des flux d'entrée et de sortie par rapport à l'horizontale H, due au moyen d'orientation, est de préférence comprise entre 5° et 30°, avantageusement de l'ordre de 15°.

Bien entendu la présente invention n'est pas limitée aux modes de réalisation particuliers qui viennent d'être décrits, mais s'étend à toutes variantes conformes à son esprit.

Le séparateur de flux conforme à la présente invention permet d'éviter toute recirculation directe entre l'entrée et la sortie, de limiter les pertes de charge, d'éviter la pénétration d'eau à l'intérieur de l'installation, de bénéficier d'un dispositif fiable et sur, et permet une installation simple qui ne requiert pas d'accessoire ni d'outillage particulier, ni un confinement spécifique de la machine thermique 110.

## Revendications

1. Séparateur de flux d'air bidirectionnel pour installation à double flux, notamment une installation thermique, destiné à être agencé à l'interface entre l'intérieur et l'extérieur d'un bâtiment, du type comprenant un boîtier (210) qui comporte :
- une ouverture principale (220), destinée à être raccordée à une installation interne (110),
- au moins deux ouvertures secondaires (230, 240), externes, distinctes de l'ouverture principale (220),
- un moyen (250) de séparation des flux comprenant au moins deux déflecteurs (260, 270) qui s'étendent, à partir d'une arête commune (222) divisant l'ouverture principale (220) en deux passages élémentaires (224, 226), afin de définir deux canaux divergents (280, 290) partant respectivement d'un passage élémentaire (224, 226) de l'ouverture principale (220) vers l'une des ouvertures secondaires externes (230, 240),
l'ouverture principale (220), destinée à être raccordée à une installation interne (110), étant inscrite dans un plan vertical (V), **caractérisé en ce que** les déflecteurs et des moyens d'orientation des flux d'entrée et de sortie qui passent par les ouvertures secondaires externes et transitent par les canaux définissent ensemble une double divergence :
- une première divergence horizontale, imposée par les déflecteurs, permettant de diriger des flux d'entrée et de sortie de part et d'autre d'un plan vertical passant par le séparateur, c'est-à-dire une divergence dans un plan horizontal,
les déflecteurs (260, 270) s'étendant dans des directions horizontalement divergentes, et
- une deuxième divergence, imposée par les moyens d'orientation, permettant de diriger les flux d'entrée et de sortie de part et d'autre d'un plan horizontal passant par le séparateur, c'est-à-dire une divergence dans un plan vertical,
les moyens d'orientation des flux étant adaptés pour que les flux d'entrée et de sortie qui transitent respectivement par l'un des deux canaux, présentent des inclinaisons (-α, + α) respectivement opposées par rapport à l'horizontale (H) au niveau des ouvertures secondaires externes.

2. Séparateur selon la revendication 1, **caractérisé par le fait que** l'inclinaison (β) entre les directions (232, 242) des flux au niveau des ouvertures externes (230, 240) et les directions des flux au niveau des passages élémentaires (224, 226) est comprise entre 10° et 90°, préférentiellement de l'ordre de 20°.

3. Séparateur selon l'une des revendications 1 ou 2, **caractérisé par le fait que** l'inclinaison (+/- a) des flux d'entrée et de sortie par rapport à l'horizontale (H), due au moyen d'orientation, est comprise entre 5° et 30°, avantageusement de l'ordre de 15°.

4. Séparateur selon l'une des revendications 1 à 3, **caractérisé par le fait qu'**à partir de l'arête commune (222), les deux déflecteurs (260, 270) s'écartent respectivement de part et d'autre d'un plan vertical (221) orthogonal à l'ouverture principale (220).

5. Séparateur selon l'une des revendications 1 à 4, **caractérisé par le fait que** les deux déflecteurs (260, 270) sont symétriques par rapport à un plan vertical (221) passant par l'arête commune (222).

6. Séparateur selon l'une des revendications 1 à 5, **caractérisé par le fait que** la section de chacun des canaux (280, 290) croît progressivement, à partir des passages élémentaires (224, 226), vers les ouvertures externes (230, 240).

7. Séparateur selon l'une des revendications 1 à 6, **caractérisé par le fait que** l'axe géométrique central des deux canaux (280, 290) est situé dans un plan horizontal commun, et qu'il est prévu dans chaque canal, au moins une ailette directionnelle (282, 292) adaptée pour diriger respectivement l'un des flux vers le bas en direction du passage (224) associé de l'ouverture principale (220) et l'autre flux vers le bas en éloignement du passage (226) respectivement associé de l'ouverture principale (220).

8. Séparateur selon la revendication 7, **caractérisé par le fait que** les ailettes (282, 292) sont placées au niveau des passages (224, 226) formés dans l'ouverture principale (220).

9. Séparateur selon l'une des revendications 1 à 8, **caractérisé par le fait que** les axes géométriques centraux des deux canaux (280, 290) sont inclinés par rapport à l'horizontale (H) selon des directions respectivement opposées.

10. Séparateur selon l'une des revendications 1 à 9, **caractérisé par le fait que** les parois internes du boîtier (210), déflecteurs (260, 270) compris, définissent une transition continue, sans rupture brutale de courbure dans l'orientation des parois, entre la section des passages (224, 226) et la section des ouvertures externes (230, 240).

11. Séparateur selon l'une des revendications 1 à 10, **caractérisé par le fait que** le boîtier (210) est formé de deux coquilles (252, 254) symétriques par rapport à un plan vertical (221), et **par le fait que** les deux coquilles (252, 254) sont identiques.

12. Séparateur selon l'une des revendications 11, **caractérisé par le fait que** chaque coquille (252, 254) possède une partie de paroi supérieure (264, 274) qui s'étend au-delà de ses parois latérales verticales (260, 262 ; 270, 272), pour former un moyen anti-pluie.

13. Installation à double flux d'air bidirectionnel, tel qu'un ensemble thermique, notamment une pompe à chaleur, comprenant :
- un dispositif thermodynamique (110) comprenant une entrée d'air et une sortie d'air (114, 116),
- un élément de canalisation bidirectionnelle (120) divisée en deux canaux parallèles (126, 127) par une paroi centrale (124) connecté à une extrémité (129) à l'entrée d'air et la sortie d'air du dispositif thermodynamique (110),
- un séparateur de flux d'air (200) selon l'une des revendications 1 à 12 agencé à l'extérieur du bâtiment et connecté à l'autre extrémité (128) de l'élément de canalisation (120) au niveau de l'ouverture principale (220).

14. Installation selon la revendication 13, **caractérisée par le fait que** l'élément de canalisation (120) est formé d'une conduite (122) dont l'enveloppe externe est de section circulaire de révolution et qui comporte une cloison (124) de séparation diamétrale continue sur toute sa longueur.

15. Installation selon l'une des revendications 13 ou 14, **caractérisée par le fait que** la cloison (124) est thermiquement isolante afin d'éviter tout transfert thermique entre les flux circulant à contre sens dans l'élément de canalisation (120).

16. Installation selon l'une des revendications 13 à 15, **caractérisée par le fait que** le séparateur de flux (200) est fixé sur un mur vertical.

17. Procédé d'implantation d'une installation selon l'une des revendications 13 à 16 dans un bâtiment, **caractérisé par le fait qu'**il comprend au moins les étapes suivantes :
- fournir un dispositif thermodynamique (110) comprenant une entrée d'air et une sortie d'air,
- installer un séparateur de flux d'air (200) à l'extérieur du bâtiment au niveau d'un mur vertical,
- fournir un élément de canalisation bidirectionnelle (120) divisée en deux canaux parallèles (126, 127) par une paroi centrale (124),
- connecter une extrémité (129) de l'élément de canalisation (120) à l'entrée d'air et la sortie d'air du dispositif thermodynamique (110),
- connecter l'autre extrémité (128) de l'élément de canalisation (120) au niveau de l'ouverture principale (220) du séparateur de flux d'air (200).

## Patentansprüche

1. Bidirektionaler Luftstromtrenner für eine Doppelstromanlage, im Speziellen für eine Heizungsanlage, der dazu bestimmt ist, an der Schnittstelle zwischen der Innenseite und der Außenseite eines Gebäudes angeordnet zu werden, in der Art ein Gehäuse (210) umfassend, welches beinhaltet:
- eine Hauptöffnung (220), die dazu bestimmt ist, an eine Innenanlage (110) angeschlossen zu werden,
- mindestens zwei äußere Sekundäröffnungen (230, 240), die von der Hauptöffnung (220) getrennt sind,
- ein Mittel (250) zum Trennen der Ströme, mindestens zwei Abweiser (260, 270) umfassend, die sich aus einer gemeinsamen Kante (222) heraus erstrecken, welche die Hauptöffnung (220) in zwei elementare Durchlässe (224, 226) teilt, um zwei divergierende Kanäle (280, 290) zu definieren, die jeweils von einem elementaren Durchlass (224, 226) der Hauptöffnung (220) zu einer der äußeren Sekundäröffnungen (230, 240) abgehen,
wobei die Hauptöffnung (220) dazu bestimmt ist, an eine Innenanlage (110) angeschlossen zu werden, die in einer vertikalen Ebene (V) eingesetzt ist, **dadurch gekennzeichnet, dass** die Abweiser und Mittel zur Ausrichtung der Eingangs- und Ausgangsströme, die durch die äußeren Sekundäröffnungen führen und durch die Kanäle hindurchgehen, gemeinsam eine Doppeldivergenz definieren:
- eine erste horizontale Divergenz, die durch die Abweiser auferlegt wird, die es ermöglicht die Eingangs- und Ausgangsströme beiderseits einer vertikalen Ebene zu leiten, die durch den Trenner führt, das heißt eine Divergenz auf einer horizontalen Ebene, wobei sich die Abweiser (260, 270) in horizontal divergierende Richtungen erstrecken, und
- eine zweite Divergenz, die durch die Mittel zum Ausrichten auferlegt wird, die es ermöglichen die Eingangs- und Ausgangsströme beiderseits einer horizontalen Ebene zu leiten, die durch den Trenner führt, das heißt eine Divergenz auf einer vertikalen Ebene,
wobei die Mittel zum Ausrichten der Ströme angepasst sind, damit die Eingangs- und Ausgangsströme, die jeweils durch einen der beiden Kanäle hindurchgehen, jeweils entgegengesetzte Neigungen (- *α*, +*α*) im Verhältnis zur Horizontalen (H) im Bereich der äußeren Sekundäröffnungen aufweisen.

2. Trenner nach Anspruch 1, **dadurch gekennzeichnet, dass** die Neigung (ß) zwischen den Richtungen (232, 242) der Ströme im Bereich der äußeren Öffnungen (230, 240) und den Richtungen der Ströme im Bereich der elementaren Durchlässe (224, 226) zwischen 10° und 90°, vorzugsweise in der Größenordnung von 20° enthalten ist.

3. Trenner nach einem der Ansprüche 1 oder 2, **dadurch gekennzeichnet, dass** die Neigung (+/- *α*) der Eingangs- und Ausgangsströme im Verhältnis zur Horizontalen (H) aufgrund des Mittels zum Ausrichten zwischen 5° und 30°, vorteilshalber in der Größenordnung von 15° enthalten ist.

4. Trenner nach einem der Ansprüche 1 bis 3, **dadurch gekennzeichnet, dass** sich die beiden Abweiser (260, 270) ausgehend von der gemeinsamen Kante (222) jeweils beiderseits einer vertikalen Ebene (221) orthogonal zur Hauptöffnung (220) abspreizen.

5. Trenner nach einem der Ansprüche 1 bis 4, **dadurch gekennzeichnet, dass** die beiden Abweiser (260, 270) im Verhältnis zu einer vertikalen Ebene (221), die durch die gemeinsame Kante (222) verläuft, symmetrisch sind.

6. Trenner nach einem der Ansprüche 1 bis 5, **dadurch gekennzeichnet, dass** der Querschnitt eines jeden der Kanäle (280, 290) ab den elementaren Durchlässen (224, 226) in Richtung der äußeren Öffnungen (230, 240) progressiv zunimmt.

7. Trenner nach einem der Ansprüche 1 bis 6, **dadurch gekennzeichnet, dass** sich die geometrische Mittelachse der beiden Kanäle (280, 290) auf einer gemeinsamen horizontalen Ebene befindet und dass in jedem Kanal mindestens eine Richtungsrippe (282, 292) vorgesehen ist, die angepasst ist, um jeweils den einen der Ströme nach unten in Richtung des zugeordneten Durchlasses (224) der Hauptöffnung (220) zu leiten, und den anderen Strom nach unten vom Durchlass (226) entfernt, der jeweils der Hauptöffnung (220) zugeordnet ist.

8. Trenner nach Anspruch 7, **dadurch gekennzeichnet, dass** die Rippen (282, 292) im Bereich der Durchlässe (224, 226) platziert sind, die in der Hauptöffnung (220) gebildet sind.

9. Trenner nach einem der Ansprüche 1 bis 8, **dadurch gekennzeichnet, dass** die geometrischen Mittelachsen der beiden Kanäle (280, 290) im Verhältnis zur Horizontalen (H) in jeweils entgegengesetzte Richtungen geneigt sind.

10. Trenner nach einem der Ansprüche 1 bis 9, **dadurch gekennzeichnet, dass** die Innenwände des Gehäuses (210), inklusive der Abweiser (260, 270), einen durchgehenden Übergang, ohne brutale Krümmungsunterbrechung in der Ausrichtung der Wände zwischen dem Querschnitt der Durchlässe (224, 226) und dem Querschnitt der äußeren Öffnungen (230, 240) definieren.

11. Trenner nach einem der Ansprüche 1 bis 10, **dadurch gekennzeichnet, dass** das Gehäuse (210) aus zwei im Verhältnis zu einer vertikalen Ebene (221) symmetrische Schalen (252, 254) gebildet wird, und dadurch, dass die beiden Schalen (252, 254) identisch sind.

12. Trenner nach einem der Ansprüche 11, **dadurch gekennzeichnet, dass** jede Schale (252, 254) einen oberen Wandabschnitt (264, 274) besitzt, der sich über ihre vertikalen Seitenwände (260, 262; 270, 272) hinaus erstreckt, um ein Regenschutzmittel zu bilden.

13. Bidirektionale Doppelstromanlage, in der Art einer Heizeinheit, im Speziellen einer Wärmepumpe, umfassend:
- eine thermodynamische Vorrichtung (110), einen Lufteingang und einen Luftausgang (114, 116) umfassend,
- ein Element einer bidirektionalen Kanalisation (120), die durch eine Mittelwand (224) in zwei parallele Kanäle (126, 127) unterteilt ist, das an einem Ende (129) mit dem Lufteingang und dem Luftausgang der thermodynamischen Vorrichtung (110) verbunden ist,
- einen Luftstromtrenner (200) nach der Ansprüche 1 bis 12, der an der Außenseite des Gebäudes angeordnet ist, und im Bereich der Hauptöffnung (220) mit dem anderen Ende (128) des Elements einer Kanalisation (120) verbunden ist.

14. Anlage nach Anspruch 13, **dadurch gekennzeichnet, dass** das Element einer Kanalisation (120) durch eine Leitung (122) gebildet wird, deren äußere Hülle einen kreisförmigen Rotationsquerschnitt aufweist und die eine diametrale, über ihre gesamte Länge durchgehende, Trennwand (124) beinhaltet.

15. Anlage nach einem der Ansprüche 13 oder 14, **dadurch gekennzeichnet, dass** die Wand (224) wärmeisolierend ist, um jedwede Wärmeübertragung zwischen den gegenläufig zirkulierenden Strömen in dem Element einer Kanalisation (120) zu vermeiden.

16. Anlage nach einem der Ansprüche 13 bis 15, **dadurch gekennzeichnet, dass** der Stromtrenner (200) an einer vertikalen Mauer befestigt wird.

17. Verfahren zur Aufstellung einer Anlage nach einem der Ansprüche 13 bis 16 in einem Gebäude, **dadurch gekennzeichnet, dass** es mindestens die folgenden Schritte umfasst:
- Bereitstellen einer thermodynamischen Vorrichtung (110), einen Lufteingang und einen Luftausgang umfassend,
- Installieren eines Luftstromtrenners (200) an der Außenseite des Gebäudes im Bereich einer vertikalen Mauer,
- Bereitstellen eines Elements einer bidirektionalen Kanalisation (120), die durch eine Mittelwand (224) in zwei parallele Kanäle (126, 127) unterteilt ist,
- Verbinden eines Endes (129) des Elements einer Kanalisation (120) am Lufteingang und dem Luftausgang der thermodynamischen Vorrichtung (110),
- Verbinden des anderen Endes (128) des Elements einer Kanalisation (120) im Bereich der Hauptöffnung (220) des Luftstromtrenners (200).

## Claims

1. Bi-directional air flow separator for a double-flow installation, in particular a thermal installation, intended to be arranged at the interface inside and outside of a building, of the type comprising a casing (210) which comprises:
- a main opening (220), intended to be connected to an internal installation (110),
- at least two secondary openings (230, 240), external, separate from the main opening (220),
- a means (250) for separating flows comprising at least two deflectors (260, 270) which extend, from a common edge (222), dividing the main opening (220) into two basic passages (224, 226), in order to define two diverging channels (280, 290) respectively going from a basic passage (224, 226) of the main opening (220) to one of the external secondary openings (230, 240), the main opening (220), intended to be connected to an internal installation (110), falling into a vertical plane (V), **characterised in that** the deflectors and the means for orienting the inlet and outlet flows which pass through the external secondary openings and travel through the channels together define a double divergence:
- a first horizontal divergence, imposed by the deflectors, enabling to direct the inlet and outlet flows on either side of a vertical plane passing through the separator, in other words, a divergence in a horizontal plane, the deflectors (260, 270) extending in horizontally divergent directions, and
- a second divergence, imposed by the orientation means, enabling to direct the inlet and outlet flows on either side of a horizontal plane passing through the separator, in other words, a divergence in a vertical plane, the means for orienting the flows being adapted such that the inlet and outlet flows which travel respectively through one of the two channels, have tilts (-α, +α), respectively opposite, with respect to the horizontal (H) at the level of the external secondary openings.

2. Separator according to claim 1, **characterised by** the fact that the tilt (β) between the directions (232, 234) of the flows at the level of the external openings (230, 240) and the directions of the flows at the level of the basic passages (224, 226) is between 10° and 90°, preferably around 20°.

3. Separator according to one of claims 1 or 2, **characterised by** the fact that the tilt (+/-α) of the inlet and outlet flows with respect to the horizontal (H), due to the orientation means, is between 5° and 30°, advantageously around 15°.

4. Separator according to one of claims 1 to 3, **characterised by** the fact that from the common edge (222), the two deflectors (260, 270) are respectively moved on either side of the vertical plane (221) orthogonal to the main opening (220).

5. Separator according to one of claims 1 to 4, **characterised by** the fact that the two deflectors (260, 270) are symmetrical with respect to a vertical plane (221) passing through the common edge (222).

6. Separator according to one of claims 1 to 5, **characterised by** the fact that the cross-section of each of the channels (280, 290) progressively grows, from the basic passages (224, 226), towards the external openings (230, 240).

7. Separator according to one of claims 1 to 6, **characterised by** the fact that the central geometric axis of the two channels (280, 290) is situated in a common horizontal plane, and that it is provided in each channel, at least one directional blade (282, 292) adapted to direct respectively one of the flows towards the bottom in the direction of the associated passage (224) of the main opening (220) and the other flow towards the bottom distant from the respectively associated passage (226) of the main opening (220).

8. Separator according to claim 7, **characterised by** the fact that the blades (282, 292) are placed at the level of the passages (224, 226) formed in the main opening (220) .

9. Separator according to one of claims 1 to 8, **characterised by** the fact that the central geometric axes of the two channels (280, 290) are tilted with respect to the horizontal (H) along the respectively opposite directions.

10. Separator according to one of claims 1 to 9, **characterised by** the fact that the internal walls of the casing (210), deflectors (260, 270) included, define a continuous transition, without any sudden breaking of the curve in the orientation of the walls, between the cross-section of the passages (224, 226) and the cross-section of the external openings (230, 240).

11. Separator according to one of claims 1 to 10, **characterised by** the fact that the casing (210) is formed from two shells (252, 254), symmetrical with respect to a vertical plane (221), and by the fact that the two shells (252, 254) are identical.

12. Separator according to one of claims 11, **characterised by** the fact that each shell (252, 254) has an upper wall part (264, 274) which extends beyond the vertical side walls (260, 262; 270, 272) thereof, to form a rain-resistant means.

13. Bi-directional double air flow installation, such as a thermal unit, in particular, a heat pump, comprising:
- a thermodynamic device (110) comprising an air inlet and an air outlet (114, 116),
- a bi-directional channelling element (120) divided into two parallel channels (126, 127) through a central wall (124) connected to an end (129) at the air inlet and the air outlet of the thermodynamic device (110),
- an air flow separator (200) according to one of claims 1 to 12 arranged outside of the building and connected to the other end (128) of the channelling element (120) at the level of the main opening (220).

14. Installation according to claim 13, **characterised by** the fact that the channelling element (120) is formed from a duct (122) of which the external casing is of a circular cross-section of revolution and which comprises a diametral separation partition (124) over the whole of the length thereof.

15. Installation according to one of claims 13 or 14, **characterised by** the fact that the partition (124) is thermally insulating in order to avoid any heat transfer between the flows circulating in the opposite direction in the channelling element (120).

16. Installation according to one of claims 13 to 15, **characterised by** the fact that the flow separator (200) is fixed on a vertical wall.

17. Method for installing an installation according to one of claims 13 to 16 in a building, **characterised by** the fact that it comprises at least the following steps:
- providing a thermodynamic device (110) comprising an air inlet and an air outlet,
- installing an air flow separator (200) outside of the building at the level of a vertical wall,
- providing a bi-directional channelling element (120) divided into two parallel channels (126, 127) through a central wall (124),
- connecting an end (129) of the channelling element (120) at the air inlet and the air outlet of the thermodynamic device (110),
- connecting the other end (128) of the channelling element (120) at the level of the main opening (220) of the air flow separator (200) .
